# EUROPÄISCHE PATENTSCHRIFT

(11) **EP 2 794 167 B1**
(45) Veröffentlichungstag und Bekanntmachung des Hinweises auf die Patenterteilung: **28.03.2018**
(21) Anmeldenummer: 12809587.4
(22) Anmeldetag: 05.12.2012
(51) Int. Cl.: B23P 9/02, B23D 77/14, C23C 4/02, B23B 41/12, B24B 39/02, B23B 29/03, C23C 30/00

(54) **KOMBINATIONSWERKZEUG UND VERFAHREN ZUR HERSTELLUNG EINER OBERFLÄCHENSTRUKTUR MIT HINTERSCHNITTEN IN EINER OBERFLÄCHE EINES WERKSTÜCKS**
COMBINATION TOOL AND METHOD FOR PRODUCING A SURFACE STRUCTURE WITH UNDERCUTS IN A SURFACE OF A WORKPIECE
OUTIL COMBINÉ ET PROCÉDÉ DE RÉALISATION D'UNE STRUCTURE SUPERFICIELLE AVEC DES CONTRE-DÉPOUILLES DANS LA SURFACE D'UNE PIÈCE

(30) Priorität: 24.12.2011 DE 102011122415
(43) Veröffentlichungstag der Anmeldung: 29.10.2014
(73) Patentinhaber: MAPAL Fabrik für Präzisionswerkzeuge Dr. Kress KG, D-73431 Aalen (DE)
(72) Erfinder: HÖHNE, Lutz, 38302 Wolfenbüttel (DE); KLIMEK, Klaus, Stefan, 37120 Bovenden (DE); VOGELSANG, Reinhard, 30179 Hannover (DE); KALUZA, Martin, 30539 Hannover (DE)
(74) Vertreter: Gleiss, Alf-Olav
(86) Internationale Anmeldenummer: PCT/EP2012/005005
(87) Internationale Veröffentlichungsnummer: WO 2013/091778

(56) Entgegenhaltungen:
- EP-A2- 1 849 543
- WO-A1-2007/118467
- DE-A1-102009 028 040
- DE-U1-202009 014 180
- JP-A- 2006 289 564
- US-A- 5 328 304
- "Formbohren und Glätten von Pleueln", VDI Z, SPRINGER VDI VERLAG, DE, Bd. 151, Nr. 4, 1. April 2009 (2009-04-01) , Seiten 70-71, XP001547744, ISSN: 0042-1766

## Beschreibung

Die Erfindung betrifft ein Kombinationswerkzeug gemäß dem Oberbegriff des Anspruchs 1 für die Herstellung einer Oberflächenstruktur mit Hinterschnitten in einer Oberfläche eines Werkstücks, welches insbesondere ein Zylinderblock eines Verbrennungsmotors ist. Ein solches Kombinationswerkzeug der genannten Art ist aus der Druckschrift DE 10 2009 028 040 A1 bekannt. Diese zeigt ein Kombinationswerkzeug für die Herstellung einer Oberflächenstruktur mit verbesserter Haftung von aufzubringenden Beschichtungen, welches ein spanendes Schneidwerkzeug und ein Umformwerkzeug umfasst.

Aufgabe der Erfindung ist es, die bekannten Möglichkeiten zum Aufrauen der Oberfläche eines Werkstücks beziehungsweise die Herstellung einer Oberflächenstruktur mit verbesserter Haftung von aufzubringenden Beschichtungen derart zu verbessern, dass die plastische Verformung der Stegstruktur zur Bildung der Hinterschnitte mit wenig Kraftaufwand erfolgen kann und weiterhin eine gleichmäßige Ausbildung der Hinterschnitte möglich ist.
Diese Aufgabe wird gelöst mit einer Vorrichtung gemäß den Merkmalen des Patentanspruchs 1. Die Unteransprüche betreffen besonders zweckmäßige Weiterbildungen der Erfindung. Erfindungsgemäß ist also ein Kombinationswerkzeug umfassend ein Schneidwerkzeug mit zumindest einem Strukturierungszahn und ein Umformwerkzeug vorgesehen, bei dem das Umformwerkzeug um die Vortriebsrichtung und die Arbeitsrichtung des Kombinationswerkzeugs vorzugsweise sphärisch zur Oberfläche hin gekrümmt ist. Das Schneidwerkzeug sowie das Umformwerkzeug sind in Richtung zum Werkstück hin über die Führungsleisten hinaus vorstehend angeordnet, wobei in Vortriebsrichtung des Kombinationswerkzeugs die Vorderkante des Schneidwerkzeugs vor und der Mittelpunkt des Umformwerkzeugs hinter dem Anfang der mindestens zwei Führungsleisten angeordnet ist. Das Umformwerkzeug ist dazu beispielsweise als ein Kugelabschnitt oder als eine Kugel ausgebildet. Hierdurch ist es möglich, eine hohe Flächenpressung bei kleiner Werkzeugkraft zu erzeugen. Die Werkzeugkraft ist jene Kraft, die für die Bewegung des Kombinationswerkzeugs aufgewendet werden muss. Das Kombinationswerkzeug wird in einer Arbeitsrichtung entlang der zu bearbeitenden Oberfläche bewegt. Darüber hinaus wird das Kombinationswerkzeug in einer von der Arbeitsrichtung abweichenden Vortriebsrichtung bewegt. Die kugelartige Form des Umformwerkzeugs ermöglicht es, auch bei einer Überlagerung der Arbeitsbewegung mit der Vortriebsbewegung eine hohe Flächenpressung bei kleiner Werkzeugkraft zu erzeugen.

Als vorteilhafte Ausbildung hat es sich erwiesen, dass das Umformwerkzeug aus einem Diamanten, insbesondere einem monokristallinen Diamanten, besteht. Durch die Verwendung eines Diamanten als Werkstoff ist es möglich, die hohen Kräfte, insbesondere bei einem Umformwerkzeug mit kleinem Durchmesser, beispielsweise weniger als 1 Millimeter, auf das Kombinationswerkzeug zu übertragen. Zugleich wird durch die Materialwahl der Verschleiß des Umformwerkzeugs reduziert.

Dabei hat es sich als günstig erwiesen, dass das als Kugel ausgeführte Umformwerkzeug in beziehungsweise an dem Kombinationswerkzeug drehbar gelagert ist. Dies erleichtert weiter die Arbeit des Kombinationswerkzeugs, da dessen Kraftaufwand reduziert wird. Die drehbare Lagerung ist beispielsweise derart ausgestaltet, dass das Umformwerkzeug in dem Kombinationswerkzeug zumindest um eine parallel zur Vortriebsrichtung des Kombinationswerkzeugs orientierte Achse und/oder um eine parallel zur Arbeitsrichtung des Kombinationswerkzeugs orientierte Achse drehbeweglich gelagert ist. Diese Beweglichkeit kann auch als eine Rotationsmöglichkeit um eine parallel zur Arbeitsrichtung orientierte Achse und zugleich um eine parallel zur Vortriebsrichtung orientierte Achse beschrieben werden.

Das Umformwerkzeug weist ein im Wesentlichen nicht spanend mit der Oberfläche eines Werkstücks in Eingriff bringbares Umformungselement auf, welches, bezogen auf die Arbeitsrichtung, Oberflächenmaterial mindestens teilweise seitlich von einem am weitesten in Richtung des Werkstücks hervorstehenden Abschnitt des Umformwerkzeugs wegdrückt. Die Oberfläche des Werkstücks wird durch das Umformwerkzeug plastisch verformt. Vorteilhaft ist, dass das Umformwerkzeug mit seinem Mittelpunkt innerhalb des Kombinationswerkzeugs angeordnet ist. So werden die Kräfte des Kombinationswerkzeugs sicher auf das Umformwerkzeug übertragen. Das Umformwerkzeug, insbesondere dessen Mittelpunkt, weist zu einer Vorderkante des Schneidwerkzeugs einen Abstand auf. Vorzugsweise ist die Vorderkante, beziehungsweise die Schneidkante, beziehungsweise der Strukturierungszahn des Schneidwerkzeugs in Vortriebsrichtung des Kombinationswerkzeugs weiter vorne angeordnet als der Mittelpunkt des Umformwerkzeugs. Durch den relativen Versatz des Schneidwerkzeugs und des Umformwerkzeugs zueinander werden sie zeitlich nacheinander mit benachbarten Bereichen der Werkstückoberfläche in Eingriff gebracht. Dabei eilt das spanende Schneidwerkzeug dem nicht spanenden Umformwerkzeug voraus. In diesem Zusammenhang hat sich als weiterhin vorteilhaft erwiesen, dass in Vortriebsrichtung des Kombinationswerkzeugs die Vorderkante, beziehungsweise die Schneidkante, beziehungsweise der Strukturierungszahn des Schneidwerkzeugs vor und der Mittelpunkt des Umformwerkzeugs hinter dem Anfang der Führungsleisten angeordnet sind. Dabei ist bevorzugt die Strecke der Vorderkante des Schneidwerkzeugs zu dem Anfang der Führungsleisten kleiner als der Weg des Mittelpunkts des Umformwerkzeugs zu dem Anfang der Führungsleisten. Idealerweise ist der Weg ein Vielfaches der Strecke und/oder der Teilung.

Günstig ist es, dass das Schneidwerkzeug mehrere Strukturierungszähne aufweist. Die Strukturierungszähne sind gegenüber einer Schneidkante in Richtung zur Oberfläche des Werkstücks hin vorstehend ausgebildet. Vorteilhaft ist es, dass die Teilung der Strukturierungszähne jeweils gleich ist. Die Teilung beträgt vorzugsweise 100 bis 500, ideal 200 bis 300 Mikrometer. Die Strukturierungszähne haben gemäß einer favorisierten Ausführungsform ein im Wesentlichen rechteckiges Profil. Für einen erleichterten Materialabtrag haben sich trapezförmige Strukturierungszähne als günstig erwiesen. In einer besonderen Ausgestaltung umfasst das Kombinationswerkzeug außerdem ein spanendes Vorbearbeitungswerkzeug, welches dem Schneidwerkzeug in Bezug auf die Bearbeitung vorauseilt, wobei das Schneidwerkzeug wiederum in Bezug auf die Bearbeitung dem Umformwerkzeug vorauseilt. Die Strukturierungszähne ermöglichen es, eine gleichmäßige Mikrostruktur herzustellen. Dabei sind die Teilung der Strukturierungszähne, also deren Abstand zueinander, auf die Vorschubgeschwindigkeit abgestimmt.

Bei dem Kombinationswerkzeug ist vorgesehen, dass zumindest ein Strukturierungszahn um den Betrag einer Strukturtiefe und der Eingriffspunkt des Umformwerkzeugs um den Betrag der Umformtiefe in Richtung zum Werkstück hin über die Schneidkante hervorstehen. Für eine geringe Belastung der Strukturierungszähne hat es sich dabei als günstig erwiesen, dass diese unterschiedlich weit radial über die Schneidkante hinaus vorstehen. Der Vorschub des Kombinationswerkzeugs ist dabei derart eingestellt, dass jeder der Strukturierungszähne einmal dieselbe Stelle der Oberfläche des Werkstücks bearbeitet. Der Strukturierungszahn, welcher am weitesten radial über die Schneidkante hinaus vorsteht, definiert die Strukturtiefe der in dem Werkstück erzeugten Vertiefung. Die Umformtiefe des Umformwerkzeugs ist kleiner oder gleich der Strukturtiefe. Die Strukturtiefe beträgt vorzugsweise 10 bis 200 Mikrometer, ideal 50 bis 80 Mikrometer.

In einer bevorzugten Ausführungsform ist das Schneidwerkzeug als eine insbesondere austauschbare Wendeschneideplatte ausgebildet. Durch Austausch des Schneidwerkzeugs kann das Kombinationswerkzeug an jede beliebige Vorschubgeschwindigkeit angepasst werden.

Bei einer besonders bevorzugten Ausführungsform des Kombinationswerkzeugs ist die Umformtiefe einstellbar. Hierdurch ist die Möglichkeit eröffnet, den Grad der Umformung festzulegen. Dabei kann das Material des Werkstücks ebenso berücksichtigt werden wie das gewünschte Maß der Hinterschneidung.

Das Kombinationswerkzeug ist insbesondere für eine rotierende Bearbeitung vorgesehen. Es umfasst dazu einen Werkzeugkörper und einen Werkzeugschaft. Der Querschnitt des Werkzeugschafts ist kleiner oder gleich dem Querschnitt des Werkzeugkörpers. Der Werkzeugschaft dient zur Verbindung mit dem Werkzeugantrieb. Das Schneidwerkzeug und das Umformwerkzeug sind an dem Werkzeugkörper angeordnet. Für die rotierende Bearbeitung hat der Werkzeugkörper eine Drehachse. Das an dem Werkzeugkörper fixierte Schneidwerkzeug und das an dem Werkzeugkörper fixierte Umformwerkzeug sind auf einen Umfangsabschnitt des Werkzeugkörpers beschränkt. Dieser Umfangsabschnitt erstreckt sich in Bezug auf die Drehachse zusammenhängend über weniger als die Hälfte des Umfangs, also über weniger als 180 Grad. Der radiale Vorsprung der Schneidkante des Schneidwerkzeugs gegenüber den Führungsleisten beträgt üblicherweise ungefähr 10 Mikrometer, jedoch nicht mehr als 100 Mikrometer und nicht weniger als 1 Mikrometer. Der radiale Vorsprung des Umformwerkzeugs gegenüber den Führungsleisten entspricht dem radialen Vorsprung der Schneidkante des Schneidwerkzeugs oder ist größer als dieser.

Eine vorteilhafte Weiterbildung des Kombinationswerkzeugs ist es, dass an dem Werkzeugkörper zumindest zwei Umformwerkzeuge und/oder zwei Schneidwerkzeuge angeordnet sind. Hierdurch ist eine höhere Umformleistung möglich. Dabei bearbeitet jedes Schneidwerkzeug einen separaten Abschnitt der Oberfläche des Werkstücks. Jedem Schneidwerkzeug ist dann zumindest ein Umformwerkzeug und zumindest eine Führungsleiste zugeordnet.

Dazu hat das Schneidwerkzeug wenigstens drei, vorzugsweise wenigstens vier Strukturierungszähne.

Als besonders praktikabel hat es sich gezeigt, dass das Umformwerkzeug eine Kugel mit einem Durchmesser größer 1 Millimeter, vorzugsweise 3 bis 8 Millimeter, aufweist. Mit einem Durchmesser, der dem 10-fachen bis 100-fachen der Teilung entspricht, kann das Umformwerkzeug gleichmäßig und nahezu parallel auf mehrere Stegoberflächen beziehungsweise die Oberfläche des Werkstücks einwirken. Der Durchmesser des Umformwerkzeugs ist vorzugsweise jedoch kleiner als der halbe Querschnitt des Werkzeugkörpers.

Die Erfindung lässt zahlreiche Ausführungsformen zu. Zur weiteren Verdeutlichung ihres Grundprinzips sind zwei davon in der Zeichnung dargestellt und werden nachfolgend beschrieben. Diese zeigt in
- Fig. 1: eine schematische Darstellung einer Seitenansicht eines Kombinationswerkzeugs;
- Fig. 2: eine schematische Darstellung einer Stirnansicht des in Figur 1 gezeigten Kombinationswerkzeugs;
- Fig. 3: in einem vergrößerten Ausschnitt der Figur 1 ein Schneidwerkzeug des Kombinationswerkzeugs;
- Fig. 4: in einem vergrößerten Ausschnitt der Figur 2 ein Umformwerkzeug des Kombinationswerkzeugs;
- Fig. 5: in einem vergrößerten Ausschnitt der Figur 2 ein Umformwerkzeug einer ersten Ausführungsform des Kombinationswerkzeugs;
- Fig. 6: eine schematische Darstellung einer strukturierten Oberfläche eines Werkstücks;
- Fig. 7: eine schematische Darstellung einer zweiten Ausführungsform des Kombinationswerkzeugs 1 und einer ersten Variante eines Verfahrensschritts zur Bearbeitung einer Oberfläche eines Werkstücks;
- Fig. 8: eine schematische Darstellung einer zweiten Ausführungsform des Kombinationswerkzeugs 1 und einer zweiten Variante eines Verfahrensschritts zur Bearbeitung einer Oberfläche eines Werkstücks;
- Fig. 9: eine schematische Darstellung einer zweiten Ausführungsform des Kombinationswerkzeugs 1 und einer dritten Variante eines Verfahrensschritts zur Bearbeitung einer Oberfläche eines Werkstücks;
- Fig. 10: eine schematische Darstellung einer zweiten Ausführungsform des Kombinationswerkzeugs 1 und einer vierten Variante eines Verfahrensschritts zur Bearbeitung einer Oberfläche eines Werkstücks.

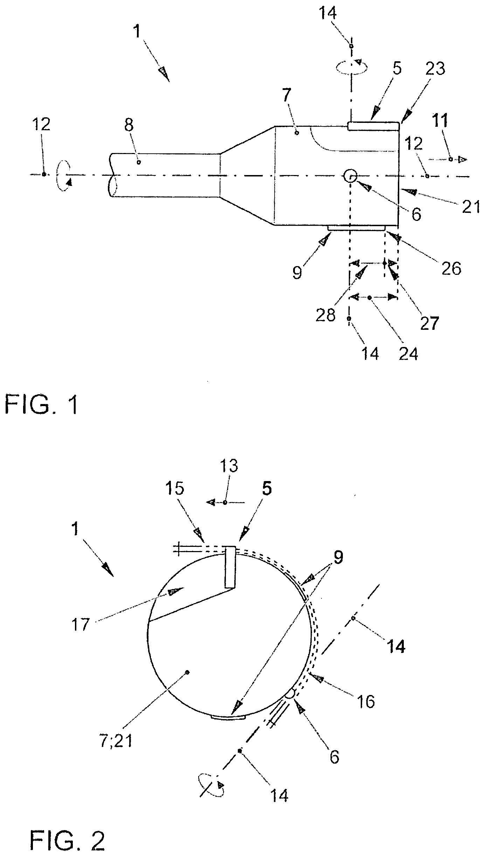

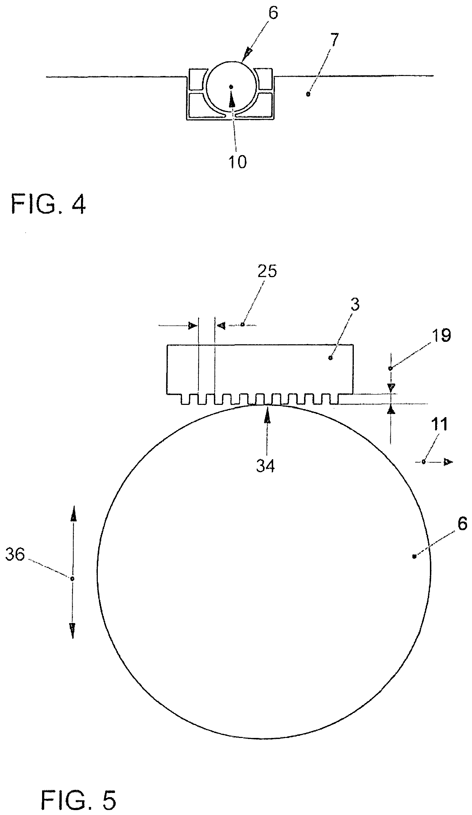

Die Figuren 1 bis 4 zeigen ein Kombinationswerkzeug 1 zum Aufrauen der in den Figuren 5 bis 9 dargestellten Oberfläche 2 eines Werkstücks 3. Das Werkstück 3 ist insbesondere ein Zylinderblock eines Verbrennungsmotors. Zur Herstellung einer Oberflächenstruktur mit Hinterschnitten 4 umfasst das Kombinationswerkzeug 1 ein spanendes Schneidwerkzeug 5. Weiterhin weist das Kombinationswerkzeug 1 ein im Wesentlichen nicht spanend mit der Oberfläche eines Werkstücks in Eingriff bringbares Umformwerkzeug 6 auf, welches, bezogen auf eine Arbeitsrichtung 13 des Kombinationswerkzeugs 1, Material der Oberfläche 2 des Werkstücks 3 mindestens teilweise seitlich von einem am weitesten in Richtung des Werkstücks 3 hervorstehenden Abschnitt des Umformwerkzeugs 6 wegdrückt. Das dargestellte Kombinationswerkzeug 1 ist für eine rotierende Bearbeitung der Oberfläche 2 vorgesehen. Es hat einen Werkzeugkörper 7 und einen Werkzeugschaft 8. In der gezeigten Ausführungsform sind an dem Werkzeugkörper 7 zwei Führungsleisten 9, das Schneidwerkzeug 5 und ein Umformwerkzeug 6 angeordnet. Das Schneidwerkzeug 5 und das Umformwerkzeug 6 sind radial über die Führungsleisten 9 hinaus vorstehend angeordnet. Das Schneidwerkzeug 5 greift mit seiner Schneidkante 33 in die unbearbeitete Oberfläche 2 des Werkstücks 3 ein. Der Abstand zwischen der unbearbeiteten Oberfläche 2 des Werkstücks 3 und der Schneidkante 33 ist die Schneidtiefe 15. Das Schneidwerkzeug 5 hat drei Strukturierungszähne 18. Die Strukturierungszähne 18 sind alle radial über die Schneidkante 33 hinaus vorstehend angeordnet. Dabei stehen die drei Strukturierungszähne 18 unterschiedlich weit radial über die Schneidkante 33 hinaus vor. Der Vorschub des Kombinationswerkzeugs 1 ist derart eingestellt, dass jeder der Strukturierungszähne 18 einmal dieselbe Stelle der Oberfläche des Werkstücks 3 bearbeitet. Der Strukturierungszahn 18, welcher am weitesten radial über die Schneidkante 33 hinaus vorsteht, definiert die Strukturtiefe 19 der in dem Werkstück 3 erzeugten Vertiefung. Die Umformtiefe 16 des Umformwerkzeugs 6 ist kleiner als die Strukturtiefe 19, welche vorzugsweise 50 bis 80 Mikrometer beträgt. Das Schneidwerkzeug 5 und das Umformwerkzeug 6 sind relativ zueinander so angeordnet, dass sie zeitlich nacheinander mit unmittelbar benachbarten Bereichen der Oberfläche 2 des Werkstücks 3 in Eingriff bringbar sind. Dabei eilt das Schneidwerkzeug 5 dem Umformwerkzeug 6 voraus. Das Schneidwerkzeug 5 und das Umformwerkzeug 6 sind auf einen Umfangsabschnitt des Werkzeugkörpers 7 beschränkt, der sich in Bezug auf eine Drehachse des Kombinationswerkzeugs 1 zusammenhängend über weniger als die Hälfte des Umfangs erstreckt.

Das Kombinationswerkzeug 1 wird in einer Arbeitsrichtung 13 entlang der zu bearbeitenden Oberfläche 2 bewegt. Darüber hinaus wird das Kombinationswerkzeug 1 in einer von der Arbeitsrichtung abweichenden Vortriebsrichtung 11 bewegt. Das Umformwerkzeug 6 ist eine Kugel beziehungsweise ein Kugelabschnitt, dessen geometrischer Mittelpunkt 10 innerhalb des Werkzeugkörpers 7 angeordnet ist. Das Umformwerkzeug 6 ist bei der hier gezeigten Ausführungsform in beziehungsweise an dem Kombinationswerkzeug 1 zumindest um eine parallel zur Vortriebsrichtung 11 des Kombinationswerkzeugs 1 orientierte Achse 12 und um eine parallel zur Arbeitsrichtung 13 des Kombinationswerkzeugs 1 orientierte Achse 14 drehbeweglich gelagert. Andere Ausführungsformen, beispielsweise mit feststehendem Umformwerkzeug 6, sind ebenso möglich.

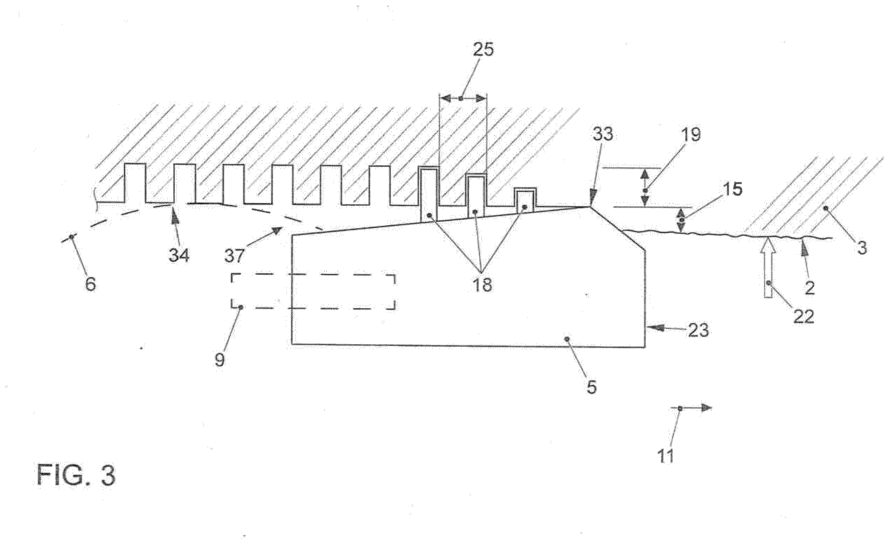

Das Schneidwerkzeug 5 ist als eine austauschbare Wendeschneideplatte ausgebildet. Zur Befestigung des Schneidwerkzeugs 5 an dem Werkzeugkörper 7 und zur Aufnahme des vom Werkstück 3 abgetragenen Materials hat das Kombinationswerkzeug 1 einen Spanraum 17. Das Schneidwerkzeug 5 hat drei Strukturierungszähne 18 mit unterschiedlichen Strukturtiefen 19 zur Ausbildung einer nutartigen Vertiefung 20 in der Oberfläche 2. Die Strukturtiefe 19 der einzelnen Strukturierungszähne 18 ist von der Stirnseite 21 des Kombinationswerkzeugs 1 zum Werkzeugschaft 8 hin ansteigend. Die unterschiedlichen Strukturtiefen 19 sind mittels gestrichelter Linien angedeutet. Die Teilung 25 der Strukturierungszähne 18, also deren Rastermaß in Vortriebsrichtung 11, ist jeweils identisch. Pfeil 22 deutet den Vormaßdurchmesser einer Bohrung in dem Werkstück 3 an. Diese Bohrung wird mit der Schneidkante 33 bearbeitet. Dies führt zu einem Materialabtrag durch die Schneidkante 33 gemäß der in Figur 3 gezeigten Schneidtiefe 15. Die Schneidkante 33 des Schneidwerkzeugs 5 ist über die Führungsleisten 9 hinaus vorstehend ausgebildet. An der durch die Schneidkante 33 bearbeiteten Bohrung gleiten die Führungsleisten 9 entlang. Das Umformwerkzeug 6, insbesondere dessen Mittelpunkt 10, weist zu einer Vorderkante 23 des Schneidwerkzeugs 5 einen Abstand 24 auf. Dabei ist die Vorderkante 23 in Vortriebsrichtung 11 des Kombinationswerkzeugs 1 weiter vorne angeordnet als das Umformwerkzeug 6 beziehungsweise dessen Mittelpunkt 10.

Die Vorderkante 23 des Schneidwerkzeugs 5 ist in Vortriebsrichtung 11 des Kombinationswerkzeugs 1 vor einem Anfang 26 der Führungsleisten 9 angeordnet. Der Mittelpunkt 10 des Umformwerkzeugs 6 ist hinter dem Anfang 26 der Führungsleisten 9 angeordnet. Dabei ist die Strecke 27 der Vorderkante 23 des Schneidwerkzeugs 5 zu dem Anfang 26 der Führungsleisten 9 kleiner als der Weg 28 zwischen dem Mittelpunkt 10 des Umformwerkzeugs 6 und dem Anfang 26 der Führungsleisten 9. Der Weg 28 ist ein Vielfaches der Strecke 27 und/oder der Teilung 25.

In Figur 3 sind die Schneidtiefe 15 des Schneidwerkzeugs 5, die Strukturtiefe 19 der Strukturierungszähne 18 und der Eingriffspunkt 34 des Umformwerkzeugs 6 zueinander dargestellt. Das Umformwerkzeug 6 und die Führungsleiste 9 sind durch gestrichelte Linien angedeutet. Das Schneidwerkzeug 5 hat einen Freiwinkel 37.

Figur 5 zeigt eine erste Ausführungsform des in den Figuren 1 und 2 gezeigten Kombinationswerkzeugs 1. Dargestellt ist der Eingriff des Umformwerkzeugs 6 in das Werkstück 3. Das Umformwerkzeug 6 hat einen Durchmesser, der ein Vielfaches größer ist als das Maß der Teilung 25. Weiterhin dargestellt sind die Strukturtiefe 19 und der Eingriffspunkt 34.

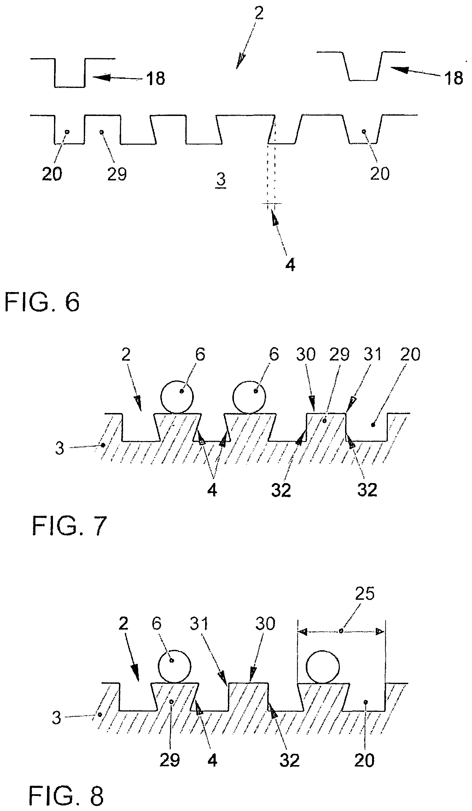

Figur 6 zeigt eine strukturierte Oberfläche 2 des Werkstücks 3, insbesondere eines Zylinderblocks eines Verbrennungsmotors. Zum Aufrauen der Oberfläche 2, insbesondere zur Herstellung einer Oberflächenstruktur mit Hinterschnitten 4, wird die Oberfläche 2 mittels des in den Figuren 1 bis 4 gezeigten Kombinationswerkzeugs 1 bearbeitet. Dies geschieht in zwei zeitlich aufeinanderfolgenden Verfahrensschritten. In dem ersten Verfahrensschritt werden in die Oberfläche 2 gleichförmige, nutartige Vertiefungen 20 eingebracht. Dazu hat das Kombinationswerkzeug 1 Strukturierungszähne 18. Es sind zwei Strukturierungszähne 18 unterschiedlicher Geometrie mit einer rechteckigen und einer trapezförmigen Form beispielhaft dargestellt. In dem zweiten Verfahrensschritt werden die zwischen den Vertiefungen 20 angeordneten beziehungsweise verbliebenen Stege 29 derart plastisch verformt, dass sich in den Vertiefungen 20 Hinterschnitte 4 ausbilden. Zur plastischen Verformung der Stege 29 in dem zweiten Verfahrensschritt wird eine Kugel als Umformwerkzeug 6 entlang zumindest eines Stegs 29 bewegt. Die plastischen Verformungen sind vorzugsweise Querverformungen, also Verformungen quer zur Orientierung der Vertiefungen 20 beziehungsweise der Stege 29.

In den Figuren 7 bis 10 sind eine zweite Ausführungsform des Kombinationswerkzeugs 1 und unterschiedliche Varianten des zweiten Verfahrensschritts dargestellt. Die Figuren zeigen eine schematische Darstellung eines kugelförmigen Umformwerkzeugs 6, dessen Durchmesser kleiner ist als das Maß der Teilung 25, und die Oberfläche 2 des Werkstücks 3 mit Vertiefungen 20, Stegen 29 und Hinterschnitten 4. Jeder Steg 29 hat eine Stegoberfläche 30, eine Stegkante 31 und zumindest eine, in der Regel zwei Stegseitenflächen 32.

Figur 7 zeigt eine plastische Verformung mittels zweier Umformwerkzeuge 6, welche auf die Stegoberflächen 30 unmittelbar benachbarter Stege 29 einwirken. Dabei werden beidseitig beider Stege 29 Hinterschnitte 4 gebildet. Die Hinterschnitte 4 greifen in die an die Stege 29 angrenzenden Vertiefungen 20 ein, wobei nach der Bearbeitung des Werkstücks 3 jede Vertiefung 20 zwei Hinterschnitte 4 hat.

Figur 8 zeigt eine plastische Verformung mittels zweier Umformwerkzeuge 6, welche auf die Stegoberflächen 30 jedes zweiten Stegs 29 einwirken. Dabei werden beidseitig der Stege 29 Hinterschnitte 4 gebildet. Die Hinterschnitte 4 greifen in die an die Stege 29 angrenzenden Vertiefungen 20 ein, wobei nach der Bearbeitung des Werkstücks 3 jede Vertiefung 20 einen Hinterschnitt 4 hat.

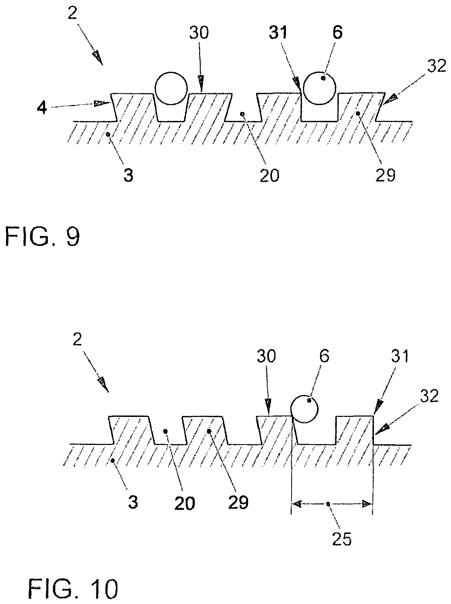

Figur 9 zeigt eine plastische Verformung mittels zweier Umformwerkzeuge 6, von denen jedes auf die einander zugewandten Stegkanten 31 zweier unmittelbar benachbarter Stege 29 einwirkt. Die Umformwerkzeuge 6 werden dazu entlang jeder zweiten Vertiefung 20 bewegt.

Durch die gleichzeitige Verformung zweier Stege 29 werden in unterschiedlichen Vertiefungen 20 Hinterschnitte 4 gebildet. Nach der Bearbeitung des Werkstücks 3 greifen lediglich in jede zweite Vertiefung 20 zwei Hinterschnitte 4 ein, die unmittelbar benachbarten Vertiefungen 20 bleiben frei von Hinterschnitten 4.

Figur 10 zeigt eine plastische Verformung mittels eines Umformwerkzeugs 6. Das Umformwerkzeug 6 wirkt auf eine Stegkante 31 und zugleich auf eine Stegseitenfläche 32 eines Stegs 29 ein. Dabei wird an der gegenüberliegenden Seite des jeweiligen Stegs 29 ein Hinterschnitt 4 gebildet. Nach der Bearbeitung des Werkstücks 3 hat jede Vertiefung 20 einen Hinterschnitt 4.

**Bezugszeichenliste**

| | | | |
|---|---|---|---|
| 1 | Kombinationswerkzeug | 21 | Stirnseite |
| 2 | Oberfläche | 22 | Pfeil |
| 3 | Werkstück | 23 | Vorderkante |
| 4 | Hinterschnitt | 24 | Abstand |
| 5 | Schneidwerkzeug | 25 | Teilung |
| 6 | Uniformwerkzeug | 26 | Anfang |
| 7 | Werkzeugkörper | 27 | Strecke |
| 8 | Werkzeugschaft | 28 | Weg |
| 9 | Führungsleisten | 29 | Steg |
| 10 | Mittelpunkt | 30 | Stegoberfläche |
| 11 | Vortriebsrichtung | 31 | Stegkante |
| 12 | Achse | 32 | Stegseitenfläche |
| 13 | Arbeitsrichtung | 33 | Schneidkante |
| 14 | Achse | 34 | Eingriffspunkt |
| 15 | Schneldtiefe | 35 | Abstand |
| 16 | Umformtiefe | 36 | Pfeil |
| 17 | Spanraum | 37 | Freiwinkel |
| 18 | Strukturierungszahn | | |
| 19 | Strukturtiefe | | |
| 20 | Vertiefung | | |

## Patentansprüche

1. Kombinationswerkzeug (1) für die Herstellung einer Oberflächenstruktur mit Hinterschnitten (4) in einer Oberfläche (2) eines Werkstücks (3), welches insbesondere ein Zylinderblock eines Verbrennungsmotors ist, wobei das Kombinationswerkzeug (1) ein Schneidwerkzeug (5) mit einer dem Werkstück (3) zugeordneten Schneidkante (33) und ein Umformwerkzeug (6) mit einem dem Werkstück (3) zugewandten Eingriffspunkt (34) umfasst, das Schneidwerkzeug (5) mindestens einen Strukturierungszahn (18) zur Ausbildung einer nutartigen Vertiefung (20) in der Oberfläche (2) aufweist, wobei das Umformwerkzeug (6) um die Vortriebsrichtung (11) und um die Arbeitsrichtung (13) des Kombinationswerkzeugs (1) zur Oberfläche (2) hin gekrümmt ist, **dadurch gekennzeichnet, dass** das Kombinationswerkzeug (1) mindestens zwei Führungsleisten (9) aufweist, wobei das Schneidwerkzeug (5) sowie das Umformwerkzeug (6) in Richtung zum Werkstück (3) hin über die Führungsleisten (9) hinaus vorstehend angeordnet sind, und dass in Vortriebsrichtung (11) des Kombinationswerkzeugs (1) die Vorderkante (23) des Schneidwerkzeugs (5) vor und der Mittelpunkt (10) des Umformwerkzeugs (6) hinter dem Anfang (26) der mindestens zwei Führungsleisten (9) angeordnet ist.

2. Kombinationswerkzeug (1) nach Anspruch 1, **dadurch gekennzeichnet, dass** das Umformwerkzeug (6) ein Kugelabschnitt oder eine Kugel ist.

3. Kombinationswerkzeug (1) nach zumindest einem der vorangehenden Ansprüche, **dadurch gekennzeichnet, dass** das Schneidwerkzeug (5) mehrere Strukturierungszähne (18) aufweist, wobei die Teilung (25) der Strukturierungszähne (18) jeweils gleich ist.

4. Kombinationswerkzeug (1) nach zumindest einem der vorangehenden Ansprüche, **dadurch gekennzeichnet, dass** zumindest ein Strukturierungszahn (18) um den Betrag einer Strukturtiefe (19) und der Eingriffspunkt (34) des Umformwerkzeugs (6) um den Betrag der Umformtiefe (16) in Richtung zum Werkstück (3) hin über die Schneidkante (33) hervorstehen.

5. Kombinationswerkzeug (1) nach zumindest einem der vorangehenden Ansprüche, **dadurch gekennzeichnet, dass** die Umformtiefe (16) kleiner ist als die Strukturtiefe (19).

6. Kombinationswerkzeug (1) nach zumindest einem der vorangehenden Ansprüche, **dadurch gekennzeichnet, dass** die Umformtiefe (16) einstellbar ist.

7. Kombinationswerkzeug (1) nach zumindest einem der vorangehenden Ansprüche, **dadurch gekennzeichnet, dass** es für eine rotierende Bearbeitung vorgesehen ist.

8. Kombinationswerkzeug (1) nach zumindest einem der vorangehenden Ansprüche, **dadurch gekennzeichnet, dass** das Umformwerkzeug (6) in dem Kombinationswerkzeug (1) zumindest um eine parallel zur Vortriebsrichtung (11) des Kombinationswerkzeugs (1) orientierte Achse (12) und um eine parallel zur Arbeitsrichtung (13) des Kombinationswerkzeugs (1) orientierte Achse (14) drehbeweglich gelagert ist.

## Claims

1. A combination tool (1) for producing a surface structure with undercuts (4) in a surface (2) of a workpiece (3), in particular a cylinder block of an internal combustion engine, wherein the combination tool (1) is a cutting tool (5) having a cutting edge (33) associated with the workpiece (3) and a forming tool (6) having a contact point (34) facing the workpiece (3), the cutting tool (5) having at least one structuring tooth (18) for the formation of a groove-like depression (20) in the surface (2), wherein the forming tool (6) is curved towards the surface (2) around the advancing direction (11) and around the working direction (13) of the combination tool (1), **characterized in that** the combination tool (1) has at least two guiding ledges (9), wherein the cutting tool (5) and the forming tool (6) are arranged so as to protrude over the guiding ledges (9) in the direction towards the workpiece (3), and **in that**, in the advancing direction (11) of the combination tool (1), the leading edge (23) of the cutting tool (5) is arranged before the starting point (26) of the two guiding ledges (9), and the center point (10) of the forming tool (6) behind the starting point (26).

2. The combination tool (1) according to claim 1, **characterized in that** the forming tool (6) is a ball section or a ball.

3. The combination tool (1) according to at least one of the preceding claims,
**characterized in that** the cutting tool (5) has multiple structuring teeth (18), wherein the pitch (25) of the structuring teeth (18) is respectively the same.

4. The combination tool (1) according to at least one of the preceding claims,
**characterized in that** at least one structuring tooth (18) and the contact point (34) of the forming tool (6) respectively protrude over the cutting edge (33) in the direction towards the workpiece (3), the first in the amount of a structure depth (19), and the second in the amount of the forming depth (16).

5. The combination tool (1) according to at least one of the preceding claims,
**characterized in that** the forming depth (16) is smaller than the structure depth (19).

6. The combination tool (1) according to at least one of the preceding claims,
**characterized in that** the forming depth (16) can be adjusted.

7. The combination tool (1) according to at least one of the preceding claims,
**characterized in that** it is provided for rotational machining.

8. The combination tool (1) according to at least one of the preceding claims,
**characterized in that** the forming tool (6) in the combination tool (1) is supported at least around an axis (12) oriented in parallel to the advancing direction (11) of the combination tool (1), and around an axis (14) oriented in parallel to the working direction (13) of the combination tool (1), in a rotatable manner.

## Revendications

1. Outil combiné (1) pour la réalisation d'une structure superficielle avec des contre-dépouilles (4) dans la surface (2) d'une pièce (3), notamment d'un bloc-cylindres d'un moteur à combustion interne, l'outil combiné (1) comprenant un outil de coupe (5) avec un bord coupant (33) associé à la pièce (3) et un outil de formage (6) avec un point de contact (34) faisant face à la pièce (3), l'outil de coupe (5) présentant au moins une dent de structuration (18) pour former une dépression (20) sous forme similaire à celle d'une rainure dans la surface (2), l'outil de formage (6) respectivement étant cintré vers la surface (2) autour de la direction d'avancement (11) et autour de la direction de travail (13) de l'outil combiné (1), **caractérisé en ce que** l'outil combiné (1) présente au moins deux rails de guidage (9), l'outil de coupe (5) et l'outil de formage (6) étant disposés dans la direction vers la pièce (3) de manière dépassant les rails de guidage (9), et **en ce que**, dans la direction d'avancement (11) de l'outil combiné (1), le bord avant (23) de l'outil de coupe (5) est disposé avant, et le point central (10) de l'outil de formage (6) est disposé derrière le début (26) des au moins deux rails de guidage (9).

2. Outil combiné (1) selon la revendication 1, **caractérisé en ce que** l'outil de formage (6) est une section de bille ou une bille.

3. Outil combiné (1) selon au moins une des revendications précédentes,
**caractérisé en ce que** l'outil de coupe (5) présente plusieurs dents de structuration (18), la séparation (25) des dents de structuration (18) étant respectivement égale.

4. Outil combiné (1) selon au moins une des revendications précédentes,
**caractérisé en ce que** d'au moins une dent de structuration (18) et le point de contact (34) de l'outil de formage (6) respectivement dépassent le bord coupant (33) dans la direction vers la pièce (3), le premier dans la mesure d'une profondeur de la structure (19), et le second dans la mesure de la profondeur de formage (16).

5. Outil combiné (1) selon au moins une des revendications précédentes,
**caractérisé en ce que** la profondeur de formage (16) est inférieure à la profondeur de structure (19).

6. Outil combiné (1) selon au moins une des revendications précédentes,
**caractérisé en ce que** la profondeur de formage (16) est réglable.

7. Outil combiné (1) selon au moins une des revendications précédentes,
**caractérisé en ce qu'**il est prévu pour l'usinage rotatif.

8. Outil combiné (1) selon au moins une des revendications précédentes,
**caractérisé en ce que** l'outil de formage (6) est supporté de manière rotative dans l'outil combiné (1) d'au moins autour d'un axe (12) orienté de façon parallèle à la direction d'avancement (11) de l'outil combiné (1) et un axe (14) orienté de façon parallèle à la direction de travail (13) de l'outil combiné (1), respectivement.
